# EUROPÄISCHE PATENTSCHRIFT

(11) **EP 0 719 793 B1**
(45) Veröffentlichungstag und Bekanntmachung des Hinweises auf die Patenterteilung: **10.10.2001**
(21) Anmeldenummer: 95120107.8
(22) Anmeldetag: 19.12.1995
(51) Int. Cl.: C08B 11/193, C08B 31/12

(54) **Verfahren zur Herstellung von wasserlöslichen Aminoalkylderivaten von Polysacchariden**
Process for preparing water-soluble aminoalkyl derivatives of polysachariden
Procédé pour la préparation de dérivés aminoalkyles de polysaccharides solubles dans l'eau

(30) Priorität: 24.12.1994 DE 4446540
(43) Veröffentlichungstag der Anmeldung: 03.07.1996
(73) Patentinhaber: Clariant GmbH, 65929 Frankfurt am Main (DE)
(72) Erfinder: Dönges, Reinhard, Dr., D-65812 Bad Soden (DE); Ehrler, Rudolf, Dr., D-65439 Flörsheim (DE); Schrell, Andreas, Dr., D-65929 Frankfurt (DE)

(56) Entgegenhaltungen:
- EP-A- 0 665 311
- DE-A- 1 543 008
- JP-A- 2 069 501
- US-A- 2 591 748
- POLYMER, Bd. 2, 1961, LONDON, Seiten 18-26, XP002000751 A.O.JAKUBOVIC ET AL.: "Anion Exchangers Based on Cellulose"
- TEXTILE RESEARCH JOURNAL, Bd. XXIII, Nr. 8, 1.August 1953, US, Seiten 522-527, XP002000752 WILSON A. REEVES ET AL.: "Aminization of Cotton"

## Beschreibung

Die vorliegende Erfindung betrifft ein Verfahren zur Herstellung von wasserlöslichen N,N-disubstituierte Aminoalkylgruppen enthaltenden Polysacchariden.

Stickstoff-haltige "kationische" Kohlenhydrate natürlichen Ursprungs wie Chitin und Chitosan sowie deren wasserlösliche Derivate haben aufgrund ihrer außerordentlich günstigen toxikologischen und ökotoxikologischen Eigenschaften eine große Zahl von Anwendungsgebieten erschlossen. Beispielhaft sollen hier die Verwendung in der Medizin, in der Kosmetik, im Nahrungsmittelsektor, bei der Abwasserbehandlung, im Pflanzenschutz und in der Biotechnologie aufgeführt werden (Übersicht: Chitin und Chitosan Sources, Chemistry, Biochemistry, Physical Properties and Applications, Ed. by G. Skåk-Bræk et al., Elsevier Applied Science, New York, London, 1989).

Einer breiten technischen Nutzung dieser Naturprodukte steht derzeit noch die aufwendige Gewinnung und der damit verbundene hohe Preis der Stickstoffhaltigen Polysaccharide entgegen. Weiterhin ist der Anwender bei Naturprodukten in der Höhe des Substitutionssgrades festgelegt.

Um diese Nachteile zu umgehen wurden mehrere Verfahren entwickelt, um preiswerte und gut zugängliche polymere Kohlenhydrate, wie Stärke oder Cellulose oder deren Derivate mit Hilfe chemischer Methoden zu kationisieren.

N,N-disubstituierte Aminoalkylgruppen enthaltende Polysaccharide sind grundsätzlich aus DE-A 19 46 722 bekannt. Zu ihrer Herstellung werden jedoch die als toxisch bekannten Chloralkylamine eingesetzt.

US-A 3 359 258 beschreibt ein Verfahren zur Herstellung von N,N-Diethylaminoethylcellulose, bei dem zunächst Aminoethylcellulose hergestellt wird und nachfolgend durch Ethylierung der Aminogruppe das Endprodukt erhalten wird. Nachteilig an diesem Verfahren ist die erforderliche Alkylierung der Aminoethylcelulose. Darüber hinaus besteht die Gefahr, daß eine möglicherweise unerwünschte Alkylierung auch an weiteren hierfür geeigneten Gruppen stattfindet.

DE-A 28 42 217 offenbart ein Verfahren zur Herstellung von β-Aminoethern durch Alkylierung von Hydroxylgruppen enthaltenden Verbindungen, die keine primäre oder sekundären Aminogruppen aufweisen mit Hilfe von am Stickstoff einfach substituierte Aminoethylsulfaten. Der Nachteil dieses Verfahrens ist darin zu sehen, daß die zur Alkylierung eingesetzten Verbindungen zur Aziridin-Bildung befähigt sein müssen.

Der Übersichtsartikel in Polymer 2, Seiten 18-26 (1961) beschreibt die Herstellung wasserunlöslicher Celluloseether durch Umsetzung von Alkalicellulose mit N, N-Dialkylaminoethylsulfaten. Die auf diese Weise hergestellten Cellulosederivate finden als Ionenaustauscher Verwendung.

EP-A 0 546 476 beschreibt die Modifizierung von Baumwollfasern mit Sulfatoethylaminen mit dem Ziel der besseren Anfärbbarkeit insbesondere mit Reaktivfarbstoffen.

Aufgabe der vorliegenden Erfindung war es, ein Verfahren zur Herstellung wasserlöslicher Polysaccharide mit N,N-disubstituierten Aminoalkylgruppen zur Verfügung zu stellen, das ohne toxische Kationisierungsreagenzien auskommt.

Gegenstand der Erfindung ist ein Verfahren zur Herstellung wasserlöslicher Polysaccharide, die unter Ausbildung einer 0,5 %igen Lösung zu mehr als 95 % in Wasser löslich sind, enthaltend
a) Substituenten, ausgewählt aus der Gruppe Alkyl, Hydroxyalkyl, Carboxyalkyl und Sulfoalkyl,
b) N,N-disubstituierte Aminoalkylgruppen, wobei der mittlere Substitutionsgrad mit N,N-disubstituierten Aminoalkylgruppen im Polysaccharid 0,01 bis 2 mol pro mol Monosaccharid-Einheit beträgt,
durch Alkylierung eines Polysaccharids in Gegenwart einer Base mit einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, sowie mit einem N,N-disubstituierten Aminoalkylschwefelsäureester,
wobei die Umsetzung mit dem N,N-disubstituierten Aminoalkylschwefelsäureester bei Temperaturen zwischen 60°C und 160°C in Gegenwart von 1,2 bis 5 mol Alkali pro mol Aminoalkylsulfat und 5 bis 30 mol Wasser pro mol Monosaccharid-Einheit erfolgt.

Unter dem Begriff Polysaccharide sind erfindungsgemäß alle oligomeren und polymeren Kohlenhydrate zu verstehen, beispielsweise Stärken, Guarane, Alginate und insbesondere Cellulosen.

Die N,N-disubstituierte Aminoalkylgruppe, die über eine Hydroxylgruppe des Polysaccharids angebunden wird, ist eine Gruppe der Formel I, 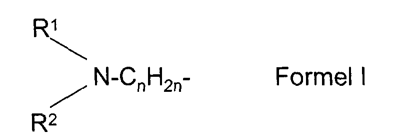 in der
R¹, R² unabhängig voneinander einen gegebenenfalls mit Hydroxy-, Alkoxy- oder Aminogruppen substituierten C₁-C₁₈-Alkylrest darstellen oder R¹ und R² zusammen einen gegebenenfalls mit Hydroxy-, Alkoxy- oder Aminogruppen substituierten cycloaliphatischen Rest mit 4 bis 10 Kohlenstoffatomen bedeuten, wobei der Alkylrest beziehungsweise der cycloaliphatische Rest zusätzlich Sauerstoff-, Schwefel- oder Stickstoffatome enthalten kann und n eine ganze Zahl von 2 bis 10, vorzugsweise 2 oder 3, bedeutet.

Der mittlere Substitutionsgrad der Polysacccharide mit Substituenten der Formel I beträgt vorzugsweise 0,02 bis 1,0 mol pro mol Monosaccharid-Einheit.

Unter den Substituenten der Polysaccharide aus der Gruppe der Alkyl, Hydroxyalkyl, Carboxyalkyl und Sulfoalkyl werden erfindungsgemäß die an sich bekannten Substituenten verstanden, die beispielsweise Polysacchariden Wasserlöslichkeit verleihen. Es sind insbesondere Hydroxyalkyl-, Carboxymethyl-, Methyl-, Ethyl-, Sulfoethyl- und 2,3-Dihydroxypropylgruppen, die an Hydroxylgruppen der Polysaccharide gebunden werden (K. Engelskirchen in Houben Weyl, Band E 20, Teil 3, S. 2042 ff). Die Einführung dieser Gruppen ist Stand der Technik und muss daher hier nicht weiter ausgeführt werden. Bei den Reagenzien zur Einführung dieser Gruppen (im folgenden Gruppe A genannt) handelt es sich beispielsweise um Alkylenoxide, Alkylhalogenide und radikalisch pfropfbare Vinylverbindungen. Vorzugsweise wird der Substitutionsgrad so gewählt, daß das Endprodukt zu mehr als 98 % in Wasser unter Ausbildung einer 0.5 %igen Lösung löslich ist.

Die Einführung der N,N-disubstituierten Aminoalkylgruppen gemäß Formel I erfolgt durch Umsetzung von Sulfatestern der Formel II 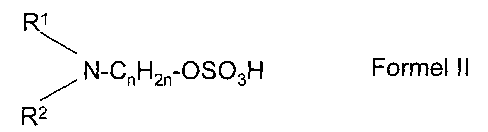 in der R¹, R² und H die oben angegebene Bedeutung besitzen, mit Hydroxylgruppen der Polysaccharide unter Ausbildung einer Etherbindung.
Besonders zu bevorzugen sind Aminoethylsulfate (IIIb-VIIb), die aus zugänglichen und preiswerten N,N-disubstituierten Alkanolaminen, beispielsweise Dimethylethanolamin (IIIa), 2-Dimethylamino-1-methylethanol (IVa), Diethylethanolamin (Va), N-Hydroxyethylpiperazin (VIa) oder N-Hydroxyethylpiperidin (Vlla), durch Veresterung mit Schwefelsäure erhalten werden können.

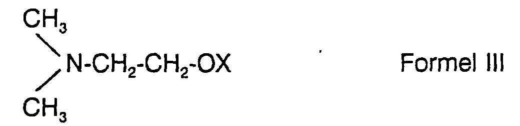

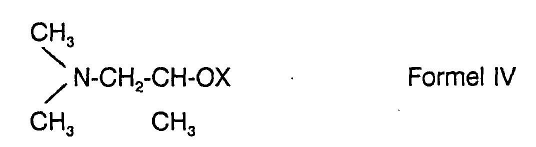

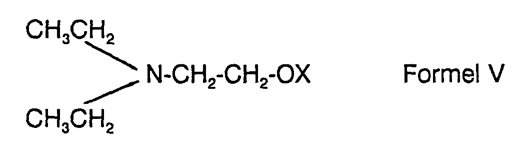

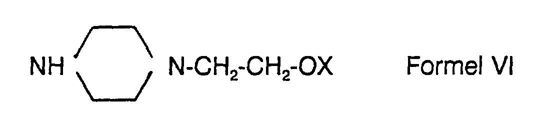

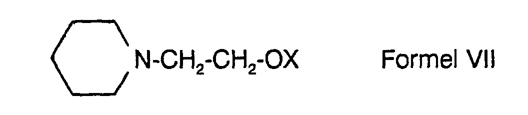

IIIa - VIIa: X = H

IIIb - VIIb: X = SO₃H

Die erfindungsgemäße Herstellung der wasserlöslichen N,N-disubstituierte Aminoalkylgruppen enthaltenden Polysaccharide kann nach drei Verfahrensvarianten erfolgen:
1. Ein Polysaccharid wird in Gegenwart von Basen zuerst mit einem Gemisch aus einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, umgesetzt wird und das Reaktionsprodukt anschließend mit einem N,N-disubstituierten Aminoalkylschwefelsäureester zur Reaktion gebracht. Der Vorteil dieses Verfahrens besteht darin, daß man den ersten Reaktionsschritt spart, wenn man als Ausgangsverbindungen für den zweiten Reaktionsschritt die breite Palette der kommerziell hergestellten wasserlöslichen Polysaccharide wie Hydroxyethyl-, Methyl-, Carboxymethyl-, Hydroxypropylcellulosen, -stärken oder - guarane zurückgreift.
2. Ein wasserunlösliches Polysaccharid wird in Gegenwart von Basen zuerst mit einem N,N-disubstituierten Aminoalkylschwefelsäureester umgesetzt und das Reaktionsprodukt anschließend mit einem Gemisch aus einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen, umgesetzt. Dieses Verfahren hat den Vorteil, daß nach dem ersten Veretherungsschritt das als Nebenprodukt entstandene Sulfat mit Wasser leicht ausgewaschen werden kann und das Endprodukt daher frei von Sulfaten gewonnen werden kann.
3. Ein Polysaccharid wird in Gegenwart von Basen gleichzeitig mit einem Gemisch aus einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, sowie mit einem N,N-disubstituierten Aminoalkylschwefelsäureester umgesetzt. Die gewünschten wasserlöslichen N, N-disubstituiertenAminoalkylgruppen enthaltenden Polysaccharide lassen sich so in einem Reaktionsschritt erhalten.

Die Umsetzung der Aminoalkylsulfate der allgemeinen Formel II mit Hydroxylgruppenhaltigen Polysacchariden erfolgt bei allen 3 Verfahrensvarianten unter alkalischer Katalyse. Dabei ist es vorteilhaft, mehr als die Basenmenge einzusetzen, die erforderlich ist, um das Aminoalkylsulfat zu neutralisieren. Die zusätzlich eingesetzte Alkalimenge beträgt vorzugsweise 0,2 bis 4 mol, insbesondere 0,5 bis 1,2 mol, pro mol Aminoalkylsulfat. Als Basen können Alkali- und Erdalkalihydroxyde eingesetzt werden. Zu bevorzugen sind Lithium-, Natrium- und Kaliumhydroxid. Das Alkalimetallhydroxid wird als konzentrierte wäßrige Lösung (20 bis 50 Gew.-%) eingesetzt. Die Umsetzung erfolgt in Gegenwart von vorzugsweise 7 bis 16 mol Wasser pro mol Monosaccharid-Einheit.

Die Reaktionstemperatur liegt vorzugsweise zwischen 80°C und 120 °C. Die Dauer der Reaktion beträgt je nach Temperatur und Katalysatormenge vorzugsweise 2 bis 20 Stunden, gute Ausbeuten werden insbesondere zwischen 8 Stunden und 16 Stunden erzielt. Bei allen Prozeduren ist es vorteilhaft, unter einer Inertgasatmosphäre zu arbeiten, um einen oxidativen Abbau des Polymers zu vermeiden.

Bei der Umsetzung der Aminoalkylsulfate mit Kohlenhydratpolymeren ist es möglich, die Reaktion in homogenem Medium oder in mehrphasigem Zustand durchzuführen.

Für die Umsetzung in homogenem Medium eignen sich Lösemittel, die die Reaktionskomponenten Aminoalkylsulfat, Polysaccharid, Base und Wasser lösen können und selber nicht oder nur in geringem Ausmaß mit einem oder mehreren Reaktionskomponenten reagieren können. Geeignete Lösemittel sind beispielsweise Glykole oder aprotisch dipolare Lösemittel wie Dimethylformamid, Dimethylsulfoxid oder N-Methylpyrrolidon. Die Konzentration der Reaktionslösung und damit die Raumausbeute ist limitiert durch die Viskosität, die beim Lösen der Polysaccharide auftritt. Dieses Verfahren ist daher sinnvoll bei niedermolekularen Polysacchariden einsetzbar.

Zu bevorzugen ist ein Verfahren in dem das Polysaccharid nicht in gelöstem sondern in festem, lediglich gequollenem Aggregatzustand vorliegt. Die restlichen Reaktanden befinden sich dabei in der flüssigen Phase. Dies kann einerseits erreicht werden, indem man die Komponenten Polysaccharid, Alkali, Wasser und Aminoalkylsulfat in den oben angegebenen Verhältnissen intensiv in einem Mischaggregat vermengt, über den oben genannten Zeitraum der erforderlichen Reaktionstemperatur aussetzt, anschließend neutralisiert und, falls erforderlich, weitere Aufarbeitungsschritte wie Auswaschen, Extrahieren oder Dialyse nachschaltet.

Andererseits ist es möglich, zu dem Reaktionsgemisch zusätzlich ein inertes Suspensionsmittel hinzuzufügen, das so beschaffen sein muß, daß sich weder die Edukte noch die Produkte wesentlich darin lösen. Dadurch erhält man ein dreiphasiges Gemisch, bestehend aus einer festen Phase (Polysaccharid) und zwei flüssigen Phasen (Wasser, Suspensionsmittel). Die Suspensionsmittelmenge beträgt den 3 bis 30fachen Gewichtsanteil des Polysaccharids, vorzugsweise den 5 bis 10fachen Gewichtsanteil. Geeignete Suspensionsmittel sind alle organischen Lösemittel, die nicht in der Lage sind, das Kohlenhydratpolymer zu lösen und sich unter den alkalischen Reaktionsbedingungen nicht zersetzen. Besonders geeignet sind daher niedere Alkohole und Ketone wie Methanol, Ethanol, Propanole, Butanole, Aceton, Methylethylketon, Ether wie zum Beispiel Diethylether, Diisopropylether, Dimethoxyethan, Tetrahydrofuran, Dioxan, Amine wie Triethylamin, Tributylamin oder Kohlenwasserstoffe wie Pentan, Hexan oder Toluol. Durch den Zusatz eines Suspensionsmittels wird der Reaktionsansatz gut rührbar, und die Umsetzung kann daher in normalen Rührgefäßen durchgeführt werden. Nach beendeter Reaktionszeit erfolgt die Neutralisation und Aufarbeitung, wie oben beschrieben.

Die nach dem erfindungsgemäßen Verfahren hergestellten wasserlöslichen Polysaccharide eignen sich als Hilfsmittel bei der Papierherstellung, als Bestandteil von kosmetischen Zubereitungen sowie als Flockungsmittel in der Abwasseraufbereitung.

Die in den nachfolgenden Beispielen angegebenen Teile und Prozente beziehen sich auf das Gewicht, soweit nicht anders vermerkt.

### Beispiel 1

### Verfahrensvariante 1

In einem 2 Liter Glasreaktor werden 80 g Hydroxyethylcellulose (Tylose ® H 4000, Hoechst) in 400 g Isopropanol suspendiert. Dazu gibt man eine Lösung von 8,0 g Natriumhydroxid in 19 ml Wasser und 21,0 g N-(2-Sulfatoethyl)piperidin in 43 ml Wasser. Der Reaktor wird verschlossen und mit Stickstoff inertisiert. Zur Homogenisierung wird 30 min bei Raumtemperatur gerührt. Dann wird auf eine Innentemperatur von 80 °C aufgeheizt und bei dieser Temperatur 12 h lang gerührt. Nach Abkühlen auf Raumtemperatur wird der Ansatz mit Essigsäure neutralisiert und abgesaugt. Das Produkt wird solange mit 80 %igem Isopropanol ausgewaschen, bis die Leitfähigkeit des Filtrats 35 *µ*S beträgt. Es wird noch zweimal mit Aceton nachgewaschen, anschließend bei 70 °C getrocknet. Die Ausbeute beträgt 79 g, der Natriumsulfatgehalt 8,0 %, der Stickstoffgehalt 0,40%. Dies entspricht einem Substitutionsgrad der Piperidinoethylgruppe von 0,08 und einer Reagenzausbeute von 23 %. Die 2 %ige Lösung des Produkts in Wasser hat eine Viskosität von 2200 mPa·s (25 °C, Höppler Viskosimeter), der wasserunlösliche Anteil beträgt 1,6 %.

### Beispiel 2

### Verfahrensvariante 1

In einem 2 Liter Glasreaktor werden 80 g Hydroxyethylcellulose (Tylose H 4000) in 400 g Isopropanol suspendiert. Dazu gibt man eine Lösung von 16,0 g Natriumhydroxid in 19 ml Wasser und 21,0 g N-(2-Sulfatoethyl)piperazin in 78 ml Wasser. Der Reaktor wird verschlossen und mit Stickstoff inertisiert. Zur Homogenisierung wird 30 min bei Raumtemperatur gerührt. Dann wird auf eine Innentemperatur von 90 °C aufgeheizt und bei dieser Temperatur 4 Stunden lang gerührt. Nach Abkühlen auf Raumtemperatur wird der Ansatz mit Essigsäure neutralisiert und abgesaugt. Das Produkt wird solange mit 80 %igem Isopropanol ausgewaschen, bis die Leitfähigkeit des Filtrats < 50 *µ*S beträgt. Es wird noch zweimal mit Aceton nachgewaschen, anschließend bei 70 °C getrocknet. Die Ausbeute beträgt 93 g, der Natriumsulfatgehalt 9,3 %, der Stickstoffgehalt 1,1 %. Dies entspricht einem Substitutionsgrad der Piperazinoethylgruppe von 0,12 und einer Reagenzausbeute von 36 %. Die 2%ige Lösung des Produkts in Wasser hat eine Viskosität von 1600 mPa·s (25 °C, Höppler Viskosimeter), der wasserunlösliche Anteil beträgt 1,2 %.

### Beispiel 3

### Verfahrensvariante 2

68 g Fichtenzellstoff (5 % Feuchte) werden mit einer Lösung von 115 ml Wasser, 80 ml Isopopropanol, 16,8 g N-(2-Sulfatoethyl)piperazin und 20,8 g Natriumhydroxid 1 Stunde lang in einem Kneter vermischt. Der Ansatz wird in eine Glasschale abgefüllt und in einen Vakuumtrockenschrank überführt. Es wird evakuiert, 1 h auf 40 °C, dann 16 h auf 120 °C aufgeheizt. Nach Abkühlen wird der Ansatz mit 1,5 I 50 %igem Isopropanol aufgeschlämmt und mit Essigsäure auf einen pH-Wert von 9 eingestellt. Es wird abgesaugt und solange mit 50 %igem Isopropanol gewaschen, bis im Filtrat mit Bariumchlorid-Lösung keine Sulfationen mehr nachweisbar sind. Danach wird noch zweimal mit Aceton nachgewaschen und bei 70 °C getrocknet. Die Ausbeute beträgt 68 g.

Die so vorbehandelte Cellulose wird in einen 2 Liter Glasreaktor überführt und in 544 g Isopropanol suspendiert. Man gibt eine Lösung von 17,6 g Natriumhydroxid in 115 g Wasser zu, verschließt den Reaktor, inertisiert mit Stickstoff und rührt 30 min bei Raumtemperatur. Über einen Dosiertrichter läßt man 99 ml Ethylenoxid zulaufen und heizt 2 h lang auf 80 °C Innentemperatur. Nach Abkühlen wird der Ansatz mit Salzsäure gegen Phenolphthalein neutralisiert, abgesaugt und mit 80%igem Isopropanol salzfrei gewaschen. Man wäscht noch zweimal mit Aceton nach und trocknet bei 70 °C im Trockenschrank. Die Ausbeute beträgt 94 g. Eine 2%ige Lösung des Produkts in Wasser hat eine Viskosität von 45 mPa·s (25 °C, Höppler-Viskosimeter) und ist zu 98 % in Wasser löslich. Der molare Substitutionsgrad, bezogen auf Hydroxyethyl beträgt 2,59, bezogen auf Piperazinoethyl 0,19 (berechnet als Stickstoffgehalt), entsprechend einer Reagenzausbeute von 48 %.

### Beispiel 4

### Verfahrensvariante 2

Beispiel 3 wird wiederholt, die Reaktionstemperatur im Vakuumtrockenschrank beträgt jedoch nur 100 °C (16 Stunden). Die nachfolgende Veretherung mit Ethylenoxid erfolgt wie bei Beispiel 3 beschrieben.

Eine 2 %ige Lösung des Produkts in Wasser hat eine Viskosität von 133 mPa·s (25 °C, Höppler-Viskosimeter). Die Löslichkeit in Wasser beträgt 98 %, der molare Substitutionsgrad beträgt 2,83 bezüglich Hydroxyethyl und 0,02 bezüglich Piperazinoethyl, entsprechend einer Reagenzausbeute von 50 %.

### Beispiel 5

### Verfahrensvariante 2

In einem 2 Liter Glasreaktor werden 68 g Fichtenzellstoff (5 % Feuchte) in 570 g Toluol suspendiert und mit einer Lösung von 16,8 g N-Sulfatoethylpiperazin und 14,4 g Natriumhydroxid in 64,8 g Wasser versetzt. Der Reaktor wird verschlossen und mit Stickstoff inertisiert. Es wird 1 Stunde lang bei Raumtemperatur, dann 18 Stunden bei 115 °C gerührt. Der Ansatz wird abgekühlt und mit Essigsäure gegen Phenolphthalein neutralisiert. Man saugt ab und wäscht das Produkt solange mit Wasser, bis im Filtrat mit Bariumchlorid kein Sulfat mehr nachweisbar ist. Danach wird noch zweimal mit Aceton nachgewaschen und bei 70 °C getrocknet. Die Ausbeute beträgt 66 g.

Die so vorbehandelte Cellulose wird in einen 2 Liter Glasreaktor übergeführt und in 544 g Isopropanol suspendiert. Man gibt eine Lösung von 17,6 g Natriumhydroxid in 115 g Wasser zu, verschließt den Reaktor, inertisiert mit Stickstoff und rührt 30 min bei Raumtemperatur. Über einen Dosiertrichter läßt man 99 ml Ethylenoxid zulaufen und heizt 2 Stunden lang auf 80 °C Innentemperatur. Nach Abkühlen wird der Ansatz mit Salzsäure gegen Phenolphtalein neutralisiert, abgesaugt und mit 80 %igem Isopropanol salzfrei gewaschen. Man wäscht noch zweimal mit Aceton nach und trocknet bei 70 °C im Trockenschrank. Die Ausbeute beträgt 96 g. Eine 2 %ige Lösung des Produkts in Wasser hat eine Viskosität von 15600 mPa·s (25 °C, Höppler-Viskosimeter) und ist zu 97 % in Wasser löslich. Der molare Substitutionsgrad, bezogen auf Hydroxyethyl beträgt 2,67, bezogen auf Piperazinoethyl 0,062 (berechnet aus Stickstoffgehalt), entsprechend einer Reagenzausbeute von 31 %.

### Beispiel 6

### Vergleichsbeispiel

In einem 2 Liter Glasreaktor werden 100 g Hydroxyethylcellulose (Tylose H 4000) in 450 g Isopropanol suspendiert. Dazu gibt man eine Lösung von 13,6 g Natriumhydroxid in 20 ml Wasser und 24,0 g 2-Aminoethylschwefelsäure in 40 ml Wasser. Der Reaktor wird verschlossen und mit Stickstoff inertisiert. Zur Homogenisierung wird 30 min bei Raumtemperatur gerührt. Dann wird auf eine Innentemperatur von 80 °C aufgeheizt und bei dieser Temperatur 12 Stunden lang gerührt. Nach Abkühlen auf Raumtemperatur wird der Ansatz mit Essigsäure neutralisiert und abgesaugt. Das Produkt wird solange mit 80 %igem Isopropanol ausgewaschen, bis die Leitfähigkeit des Filtrats <50 *µ*S beträgt. Es wird noch zweimal mit Aceton nachgewaschen, anschließend bei 70 °C getrocknet. Die Ausbeute beträgt 97 g, der Natriumsulfatgehalt 9,3 %, der Stickstoffgehalt 0,10 %. Dies entspricht einem Substitutionsgrad der Aminoethylgruppe von 0,02 und einer Reagenzausbeute von 4 %.

## Patentansprüche

1. Verfahren zur Herstellung wasserlöslicher Polysaccharide, die unter Ausbildung einer 0,5 %igen Lösung zu mehr als 95 % in Wasser löslich sind, enthaltend
a) Substituenten, ausgewählt aus der Gruppe Alkyl, Hydroxyalkyl, Carboxyalkyl und Sulfoalkyl,
b) N,N-disubstituierte Aminoalkylgruppen,
wobei der mittlere Substitutionsgrad mit N,N-disubstituierten Aminoalkylgruppen im Polysaccharid 0,01 bis 2 mol pro mol Monosaccharid-Einheit beträgt, durch Alkylierung eines Polysaccharids in Gegenwart einer Base mit einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, sowie mit einem N,N-disubstituierten Aminoalkylschwefelsäureester,
wobei die Umsetzung mit dem N,N-disubstituierten Aminoalkylschwefelsäureester bei Temperaturen von 60°C bis 160°C in Gegenwart von 1,2 bis 5 mol Alkali pro mol Aminoalkylsulfat und 5 bis 30 mol Wasser pro mol Monosaccharid-Einheiten erfolgt.

2. Verfahren nach Anspruch 1, **dadurch gekennzeichnet, daß** das Polysaccharid zuerst in Gegenwart einer Base mit einem Gemisch aus einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, umgesetzt wird und das Reaktionsprodukt anschließend mit einem N,N-disubstituierten Aminoalkylschwefelsäureester zur Reaktion gebracht wird.

3. Verfahren nach Anspruch 1, **dadurch gekennzeichnet, daß** das Polysaccharid in Gegenwart von Base zuerst mit einem N,N-disubstituierten Aminoalkylschwefelsäureester umgesetzt wird und das Reaktionsprodukt anschließend mit einem Gemisch aus einem oder mehreren Alkylierungsreagentien ausgewählt, aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, zur Reaktion gebracht wird.

4. Verfahren nach Anspruch 1, **dadurch gekennzeichnet, daß** das Polysaccharid in Gegenwart einer Base gleichzeitig mit einem Gemisch aus einem oder mehreren Alkylierungsreagenzien, ausgewählt aus der Gruppe der Alkylgruppen übertragenden Verbindungen, der Hydroxyalkylgruppen übertragenden Verbindungen, der Carboxyalkylgruppen übertragenden Verbindungen und der Sulfoalkylgruppen übertragenden Verbindungen, sowie mit einem N,N-disubstituierten Aminoalkylschwefelsäureester zur Reaktion gebracht wird.

5. Verfahren nach Anspruch 1, **dadurch gekennzeichnet, daß** ein N,N-disubstituierter Aminoalkylschwefelsäureester der Formel II 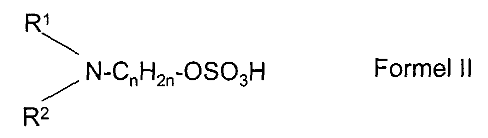 eingesetzt wird, in der
R¹, R² unabhängig voneinander einen gegebenenfalls mit Hydroxy-, Alkoxy- oder Aminogruppen substituierten C₁-C₁₈-Alkylrest darstellen oder R¹ und R² zusammen einen gegebenenfalls mit Hydroxy-, Alkoxy- oder Aminogruppen substituierten cycloaliphatischen Rest mit 4 bis 10 Kohlenstoffatomen bedeuten, wobei der Alkylrest beziehungsweise der cycloaliphatische Rest zusätzlich Sauerstoff-, Schwefel- oder Stickstoffatome enthalten kann und n eine ganze Zahl von 2 bis 10, vorzugsweise 2 oder 3, bedeutet.

6. Verfahren nach Anspruch 5, **dadurch gekennzeichnet, dass** ein Schwefelsäureester des Dimethylethanolamins, des 2-Dimethylamino-1-methylethanols, des Diethylethanolamins, des N-Hydroxyethylpiperazins oder des N-Hydroxyethylpiperidins eingesetzt wird.

7. Verfahren nach Anspruch 1, **dadurch gekennzeichnet, daß** die Umsetzung des Polysaccharids mit dem N,N-disubstituierten Sulfatoalkylamin in Gegenwart von bis zu 20 Gewichtsteilen eines inerten organischen Lösemittels, das nicht dazu geeignet ist das Produkt zu lösen, aus der Gruppe der niederen Alkohole, Ketone, Ether und Kohlenwasserstoffe erfolgen.

## Claims

1. A process for the preparation of water-soluble polysaccharides, which are soluble in water to more than 95% with formation of a 0.5% strength solution and contain
a) substituents selected from the group consisting of alkyl, hydroxyalkyl, carboxyalkyl and sulfoalkyl,
b) N,N-disubstituted aminoalkyl groups,
the mean degree of substitution with N,N-disubstituted aminoalkyl groups in the polysaccharide being 0.01 to 2 mol per mole of monosaccharide unit by alkylation of a polysaccharide in the presence of a base with one or more alkylation reagents, selected from the group consisting of compounds transferring alkyl groups, compounds transferring hydroxyalkyl groups, compounds transferring carboxyalkyl groups and compounds transferring sulfoalkyl groups, and also with an N,N-disubstituted aminoalkylsulfuric acid ester,
the reaction with the N,N-disubstituted aminoalkylsulfuric acid ester being carried out at temperatures from 60°C to 160°C in the presence of 1.2 to 5 mol of alkali per mole of aminoalkyl sulfate and 5 to 30 mol of water per mole of monosaccharide units.

2. The process as claimed in claim 1, wherein the polysaccharide is first reacted in the presence of a base with a mixture of one or more alkylating reagents selected from the group consisting of compounds transferring alkyl groups, compounds transferring hydroxyalkyl groups, compounds transferring carboxyalkyl groups and compounds transferring sulfoalkyl groups, and the reaction product is then reacted with an N,N-disubstituted aminoalkylsulfuric acid ester.

3. The process as claimed in claim 1, wherein the polysaccharide is first reacted in the presence of a base with an N,N-disubstituted aminoalkylsulfuric acid ester and the reaction product is then reacted with a mixture of one or more alkylating reagents selected from the group consisting of compounds transferring alkyl groups, compounds transferring hydroxyalkyl groups, compounds transferring carboxyalkyl groups and compounds transferring sulfoalkyl groups.

4. The process as claimed in claim 1, wherein the polysaccharide is reacted in the presence of a base simultaneously with a mixture of one or more alkylating reagents selected from the group consisting of compounds transferring alkyl groups, compounds transferring hydroxyalkyl groups, compounds transferring carboxyalkyl groups and compounds transferring sulfoalkyl groups, and also with an N,N-disubstituted aminoalkylsulfuric acid ester.

5. The process as claimed in claim 1, wherein an N,N-disubstituted aminoalkylsulfuric acid ester of the formula II 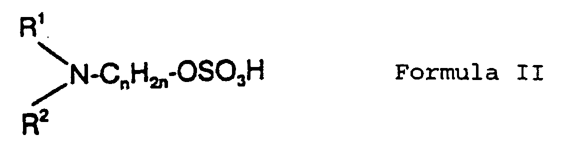 is employed in which
R¹ and R² independently of one another are a C₁-C₁₈-alkyl radical which is optionally substituted by hydroxyl, alkoxy or amino groups or R¹ and R² together are a cycloaliphatic radical having 4 to 10 carbon atoms, which is optionally substituted by hydroxyl, alkoxy or amino groups, it being possible for the alkyl radical or the cycloaliphatic radical additionally to contain oxygen, sulfur or nitrogen atoms, and n is an integer from 2 to 10, preferably 2 or 3.

6. The process as claimed in claim 5, wherein a sulfuric acid ester of dimethylethanolamine, 2-dimethylamino-1-methylethanol, diethylethanolamine, N-hydroxyethylpiperazine or N-hydroxyethylpiperidine is employed.

7. The process as claimed in claim 1, wherein the reaction of the polysaccharide with the N,N-disubstituted sulfatoalkylamine is carried out in the presence of up to 20 parts by weight of an inert organic solvent which is unsuitable for dissolving the product, from the group consisting of the lower alcohols, ketones, ethers and hydrocarbons.

## Revendications

1. Procédé pour la préparation de polysaccharides hydrosolubles qui sont solubles dans l'eau avec formation d'une solution à 0,5 % à plus de 95 %, contenant
a) des substituants choisis dans le groupe de alkyle, hydroxyalkyle, carboxyalkyle et sulfoalkyle,
b) des groupes aminoalkyle N,N-disubstitués, le degré de substitution moyen par des groupes aminoalkyle N,N-disubstitués dans le polysaccharide étant de 0,01 à 2 mol par mol d'unité de monosaccharide, par alkylation d'un polysaccharide en présence d'une base, au moyen d'un ou plusieurs réactifs d'alkylation choisis dans le groupe des composés transférant des groupes alkyle, des composés transférant des groupes hydroxyalkyle, des composés transférant des groupes carboxyalkyle et des composés transférant des groupes sulfoalkyle, ainsi qu'au moyen d'un ester d'acide aminoalkylsulfurique N,N-disubstitué,
la réaction avec l'ester d'acide aminoalkylsufurique N,N-disubstitué ayant lieu à des températures de 60°C à 160°C en présence de 1,2 à 5 mol d'alcali par mol d'aminoalkylsulfate et de 5 à 30 mol d'eau par mol d'unités de monosaccharide.

2. Procédé selon la revendication 1, **caractérisé en ce que** le polysaccharide réagit d'abord en présence d'une base avec un mélange d'un ou plusieurs réactifs d'alkylation choisis dans le groupe des composés transférant des groupes alkyle, des composés transférant des groupes hydroxyalkyle, des composés transférant des groupes carboxyalkyle et des composés transférant des groupes sulfoalkyle, et **en ce que** le produit réactionnel est ensuite mis à réagir avec un ester d'acide aminoalkylsulfurique N,N-disubstitué.

3. Procédé selon la revendication 1, **caractérisé en ce que** le polysaccharide, en présence de base, réagit d'abord avec un ester d'acide aminoalkylsulfurique N,N-disubstitué et **en ce que** le produit réactionnel est ensuite mis à réagir avec un mélange d'un ou plusieurs réactifs d'alkylation choisis dans le groupe des composés transférant des groupes alkyle, des composés transférant des groupes hydroxyalkyle, des composés transférant des groupes carboxyalkyle et des composés transférant des groupes sulfoalkyle.

4. Procédé selon la revendication 1, **caractérisé en ce que** le polysaccharide, en présence d'une base, est mis à réagir simultanément avec un mélange d'un ou plusieurs réactifs d'alkylation choisis dans le groupe des composés transférant des groupes alkyle, des composés transférant des groupes hydroxyalkyle, des composés transférant des groupes carboxyalkyle et des composés transférant des groupes sulfoalkyle, ainsi qu'avec un ester d'acide aminoalkylsulfurique N,N-disubstitué.

5. Procédé selon la revendication 1, **caractérisé en ce que** l'on utilise un ester d'acide aminoalkylsulfurique de formule II 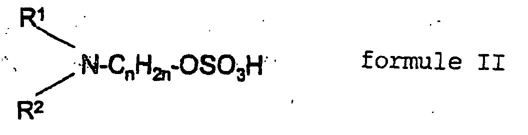 dans laquelle
R¹, R², indépendamment l'un de l'autre, représentent un reste alkyle en C₁-C₁₈, éventuellement substitué par des groupes hydroxy, alcoxy ou amino ou R¹ et R² représentent ensemble un reste cycloaliphatique avec 4 à 10 atomes de carbone, éventuellement substitué par des groupes hydroxy, alcoxy ou amino, le reste alkyle ou respectivement le reste cycloaliphatique pouvant contenir de plus des atomes d'oxygène, de soufre ou d'azote et n représente un nombre entier de 2 à 10, de préférence 2 ou 3.

6. Procédé selon la revendication 5, **caractérisé en ce qu'**un ester d'acide sulfurique de la diméthyléthanolamine, du 2-diméthylamino-1-méthyléthanol, de la diéthyléthanolamine, de la N-hydroxyéthylpipérazine ou de la N-hydroxyéthylpipéridine est utilisé.

7. Procédé selon la revendication 1, **caractérisé en ce que** la réaction du polysaccharide avec la sulfatoalkylamine N,N-disubstituée a lieu en présence de jusqu'à 20 parties en poids d'un solvant organique inerte qui n'est pas susceptible de dissoudre le produit, choisi dans le groupe des alcools, cétones, éthers et hydrocarbures inférieurs.
